(19) Europäisches Patentamt
European Patent Office
Office européen des brevets

(11) EP 4 282 270 A1

(12) **EUROPEAN PATENT APPLICATION**
published in accordance with Art. 153(4) EPC

(43) Date of publication:
**29.11.2023 Bulletin 2023/48**

(21) Application number: **21921366.7**

(22) Date of filing: **27.12.2021**

(51) International Patent Classification (IPC):
***A01N 43/50*** *(2006.01)* ***A01N 25/00*** *(2006.01)*
***A01P 7/04*** *(2006.01)*

(52) Cooperative Patent Classification (CPC):
**A01N 25/00; A01N 43/50; A01P 7/04**

(86) International application number:
**PCT/JP2021/048496**

(87) International publication number:
**WO 2022/158265 (28.07.2022 Gazette 2022/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.01.2021 JP 2021007350**

(71) Applicant: **Nippon Soda Co., Ltd.**
**Tokyo 100-8165 (JP)**

(72) Inventors:
- **AMANO Kae**
  **Makinohara-shi, Shizuoka 421-0412 (JP)**
- **TAKAHASHI Yoshitaka**
  **Makinohara-shi, Shizuoka 421-0412 (JP)**
- **NISHIO Fumiya**
  **Odawara-shi, Kanagawa 250-0280 (JP)**

(74) Representative: **Sonnenhauser, Thomas Martin**
**Wuesthoff & Wuesthoff**
**Patentanwälte PartG mbB**
**Schweigerstraße 2**
**81541 München (DE)**

(54) **METHOD, SEEDS, AND COMPOSITION FOR CONTROLLING INSECTS IN CROPS**

(57) The present invention provides a method for controlling insects, comprising a step of applying at least one selected from a compound represented by formula (I) and a salt thereof to seeds

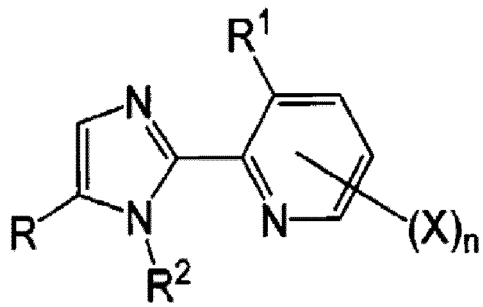

(I)

(in the formula, $R^1$ represents a substituted or unsubstituted C1-6 alkylthio group, a substituted or unsubstituted C1-6 alkylsulfinyl group, or a substituted or unsubstituted C1-6 alkylsulfonyl group, $R^2$ represents a hydrogen atom,or a substituted or unsubstituted C1-6 alkyl group, R represents a C1-6 haloalkyl group or a C2-6 haloalkenyl group, X represents a substituted or unsubstituted C1-6 alkyl group or the like, n represents a chemically acceptable number of X and is an integer of 0 to 4].

EP 4 282 270 A1

## Description

[Technical Field]

The present invention provides a method that is useful for controlling insects in crop plants by seed treatment. The method makes it possible to increase the yield. The method is suitable for controlling insects, especially grubs (larvae). Moreover, the method is suitable for improving one or more agronomic characteristics of plants.

[Background Art]

Patent Documents 1 to 3 disclose that pyridylimidazole compounds are useful as an insecticide or an acaricide.

[Citation List]

[Patent Document]

[Patent Document 1] PCT International Publication No. WO 2017/104741
[Patent Document 2] PCT International Publication No. WO 2020/071304
[Patent Document 3] PCT International Publication No. WO 2020/090585

[Summary of Invention]

[Technical Problem]

An object of the present invention is to provide a method for controlling insects in crops by seed treatment using a specific pyridylimidazole compound.

[Solution to Problem]

As a result of intensive research to solve the above problems, the present inventor has completed the present invention including the following aspects.
That is, the present invention includes the following aspects.
[1] A method for controlling insects, comprising a step of applying at least one selected from a compound represented by the following formula (I) and a salt thereof to a seed

[Chemical formula 1]

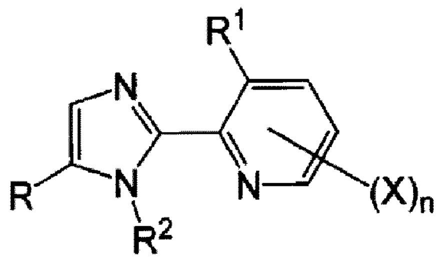

(I)

[in formula (I),

$R^1$ represents a substituted or unsubstituted C1-6 alkylthio group, a substituted or unsubstituted C1-6 alkylsulfinyl group, or a substituted or unsubstituted C1-6 alkylsulfonyl group,
$R^2$ represents a hydrogen atom, or a substituted or unsubstituted C1-6 alkyl group,
R represents a C1-6 haloalkyl group, or a C2-6 haloalkenyl group,
X represents a substituted or unsubstituted C1-6 alkyl group, a substituted or unsubstituted C2-6 alkenyl group,

a substituted or unsubstituted C2-6 alkynyl group, a hydroxyl group, a substituted or unsubstituted C1-6 alkoxy group, a formyl group, a substituted or unsubstituted C1-6 alkylcarbonyl group, a substituted or unsubstituted C1-6 alkoxycarbonyl group, a mercapto group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-8 cycloalkyl group, a substituted or unsubstituted C6-10 aryl group, a substituted or unsubstituted 5- to 6-membered heteroaryl group, a substituted or unsubstituted amino group, a halogeno group, a cyano group, or a nitro group,

n represents the number of X, and is an integer of 0 to 4, and when n is 2 or more, X may be the same as or different from each other].

[2] The method according to [1], wherein the seed is at least one selected from the group consisting of a rape seed, a corn seed, a soybean seed, a rice seed, a wheat seed, and a barley seed.

[3] The method according to [1] or [2], wherein the insect is a soil-dwelling grub.

[4] The method according to [1] or [2], wherein the insect is an insect of the family Chrysomelidae.

[5] The method according to [1] or [2], wherein the insect is at least one selected from the group consisting of Diabrotica balteata, Diabrotica virgifera, Popillia species, Agriotes species, Bruchus species, Phyllotreta species, Phaedon cochleariae, Agrotis segetum, Spodoptera frugiperda, Rhopalosiphum padi, Myzus persicae, Aphis gossypiii, and Nilaparvata lugens.

[6] The method according to any one of [1] to [5], wherein the applying step is performed by coating the seed with

at least one selected from the group consisting of the compound represented by the above formula (I) and a salt thereof, or

at least one selected from the group consisting of the compound represented by the above formula (I) and a salt thereof, and at least one further insecticide or fungicide.

[7] The method according to any one of [1] to [6], wherein at least one selected from the group consisting of the compound represented by formula (I) and a salt thereof is used as the only insecticide.

[8] The method according to any one of [1] to [6], wherein at least one selected from the group consisting of the compound represented by formula (I) and a salt thereof is used as the only fungicide.

[9] The method according to any one of [1] to [8], wherein a coating amount of the at least one selected from the group consisting of the compound represented by formula (I) and a salt thereof is 0.05 g to 1.5 g/kg seed.

[10] The method according to any one of [1] to [5], wherein the applying step is performed by performing the following steps in this order:

A) making a furrow in cultivated land;

B) seeding the furrow with seed;

C) applying to the furrow a composition comprising at least one selected from the group consisting of the compound represented by formula (I) and a salt thereof; and

D) closing the furrow.

[11] A seed coated with at least one selected from a compound represented by formula (I) and a salt thereof

[Chemical formula 2]

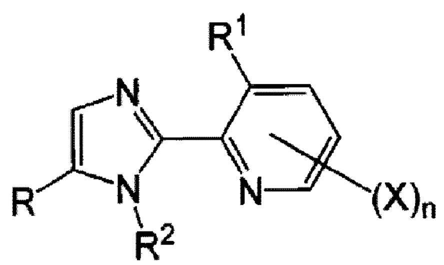

(I)

[in formula (I),

$R^1$ represents a substituted or unsubstituted C1-6 alkylthio group, a substituted or unsubstituted C1-6 alkylsulfinyl group, or a substituted or unsubstituted C1-6 alkylsulfonyl group,

$R^2$ represents a hydrogen atom, or a substituted or unsubstituted C1-6 alkyl group,
R represents a C1-6 haloalkyl group, or a C2-6 haloalkenyl group,
X represents a substituted or unsubstituted C1-6 alkyl group, a substituted or unsubstituted C2-6 alkenyl group, a substituted or unsubstituted C2-6 alkynyl group, a hydroxyl group, a substituted or unsubstituted C1-6 alkoxy group, a formyl group, a substituted or unsubstituted C1-6 alkylcarbonyl group, a substituted or unsubstituted C1-6 alkoxycarbonyl group, a mercapto group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-8 cycloalkyl group, a substituted or unsubstituted C6-10 aryl group, a substituted or unsubstituted 5- to 6-membered heteroaryl group, a substituted or unsubstituted amino group, a halogeno group, a cyano group, or a nitro group,
n represents the number of X, and is an integer of 0 to 4, and when n is 2 or more, X may be the same as or different from each other].

[Advantageous Effects of Invention]

Surprisingly, it was found that a compound represented by formula (I) or a salt thereof is extremely suitable as a seed treatment, in preferred embodiments for controlling insects in crops.

[Description of Embodiments]

[Compound (I)]

The "compound (I)" constituting the aspect of the present invention is represented by the following formula (I).

[Chemical formula 3]

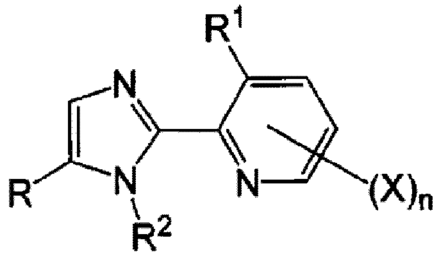

(I)

[In formula (I),

$R^1$ represents a substituted or unsubstituted C1-6 alkylthio group, a substituted or unsubstituted C1-6 alkylsulfinyl group, or a substituted or unsubstituted C1-6 alkylsulfonyl group,
$R^2$ represents a hydrogen atom, or a substituted or unsubstituted C1-6 alkyl group,
R represents a C1-6 haloalkyl group, or a C2-6 haloalkenyl group,
X represents a substituted or unsubstituted C1-6 alkyl group, a substituted or unsubstituted C2-6 alkenyl group, a substituted or unsubstituted C2-6 alkynyl group, a hydroxyl group, a substituted or unsubstituted C1-6 alkoxy group, a formyl group, a substituted or unsubstituted C1-6 alkylcarbonyl group, a substituted or unsubstituted C1-6 alkoxycarbonyl group, a mercapto group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-8 cycloalkyl group, a substituted or unsubstituted C6-10 aryl group, a substituted or unsubstituted 5- to 6-membered heteroaryl group, a substituted or unsubstituted amino group, a halogeno group, a cyano group, or a nitro group,
n represents a chemically acceptable number of X, and is an integer of 0 to 4, and when n is 2 or more, X may be the same as or different from each other.]

In the present invention, the term "unsubstituted" indicates a group including only a mother nucleus. When a group is referred to as a name of a mother nucleus without "substituted", this refers to "unsubstituted" unless specifically indicated otherwise.

On the other hand, the term "substituted" indicates that at least one of the hydrogen atoms of the mother nucleus is substituted with a substituent having a structure that is the same as the structure of the mother nucleus or different from the structure of the mother nucleus. Thus, a "substituent" is another group bonded with the mother nucleus. There

may be one substituent or two or more substituents. Two or more substituents may be the same as or different from each other.

For example, the term "C 1-6" or the like indicates that the number of carbon atoms of the mother nucleus is 1 to 6. The number of carbon atoms present in substituents is not included in this number of carbon atoms. For example, a butyl group having an ethoxy group as a substituent thereof is classified as a C2 alkoxy C4 alkyl group.

The "substituent" is not particularly limited as long as it is chemically acceptable and achieves the effects of the present invention.

Examples of the "substituent" are as follows:

a C1-6 alkyl group such as a methyl group, ethyl group, n-propyl group, i-propyl group, n-butyl group, s-butyl group, i-butyl group, t-butyl group, n-pentyl group, n-hexyl group or the like;
a C2-6 alkenyl group such as a vinyl group, 1-propenyl group, 2-propenyl group (allyl group), 1-butenyl group, 2-butenyl group, 3-butenyl group, 1-methyl-2-propenyl group, 2-methyl-2-propenyl group or the like;
a C2-6 alkynyl group such as an ethynyl group, 1-propynyl group, 2-propynyl group, 1-butynyl group, 2-butynyl group, 3-butynyl group, 1-methyl-2-propynyl group or the like;
a C3-8 cycloalkyl group such as a cyclopropyl group, cyclobutyl group, cyclopentyl group, cyclohexyl group, cubanyl group or the like;
a C6-10 aryl group such as a phenyl group, naphthyl group or the like;
a C6-10 aryl C1-6 alkyl group such as a benzyl group, phenethyl group or the like;
a 3-6 membered heterocyclyl group;
a 3-6 membered heterocyclyl C1-6 alkyl group;
a hydroxy group;
a C1-6 alkoxy group such as a methoxy group, ethoxy group, n-propoxy group, i-propoxy group, n-butoxy group, s-butoxy group, i-butoxy group, t-butoxy group or the like;
a C2-6 alkenyloxy group such as a vinyloxy group, allyloxy group, propenyloxy group, butenyloxy group or the like;
a C2-6 alkynyloxy group such as an ethynyloxy group, propargyloxy group or the like;
a C6-10 aryloxy group such as a phenoxy group, naphthoxy group or the like;
a C6-10 aryl C1-6 alkoxy group such as a benzyloxy group, phenethyloxy group or the like;
a 5-6 membered heteroaryloxy group such as a thiazolyloxy group, pyridyloxy group or the like;
a 5-6 membered heteroaryl C1-6 alkyloxy group such as a thiazolyl methyloxy group, pyridyl methyloxy group or the like;
a formyl group;
a C1-6 alkyl carbonyl group such as an acetyl group, propionyl group or the like;
a formyloxy group;
a C1-6 alkyl carbonyloxy group such as an acetyloxy group, propionyloxy group or the like;
a C6-10 aryl carbonyl group such as a benzoyl group or the like;
a C1-6 alkoxycarbonyl group such as a methoxycarbonyl group, ethoxycarbonyl group, n-propoxycarbonyl group, i-propoxycarbonyl group, n-butoxycarbonyl group, t-butoxycarbonyl group or the like;
a C1-6 alkoxycarbonyloxy group such as a methoxycarbonyloxy group, ethoxycarbonyloxy group, n-propoxycarbonyloxy group, i-propoxycarbonyloxy group, n-butoxycarbonyloxy group, t-butoxycarbonyloxy group or the like;
a carboxyl group;
a halogeno group such as a fluoro group, chloro group, bromo group, iodo group or the like;
a C1-6 haloalkyl group such as a chloromethyl group, chloroethyl group, trifluoromethyl group, 1,2-dichloro-n-propyl group, 1-fluoro-n-butyl group, perfluoro-n-pentyl group or the like;
a C2-6 haloalkenyl group such as a 2-chloro-1-propenyl group, 2-fluoro-1-butenyl group or the like;
a C2-6 haloalkynyl group such as a 4,4-dichloro-1-butynyl group, 4-fluoro-1-pentynyl group, 5-bromo-2-pentynyl group or the like;
a C1-6 haloalkoxy group such as a trifluoromethoxy group, 2-chloro-n-propoxy group, 2,3-dichlorobutoxy group or the like;
a C2-6 haloalkenyloxy group such as a 2-chloropropenyloxy group, 3-bromobutenyloxy group or the like;
a C1-6 haloalkyl carbonyl group such as a chloroacetyl group, trifluoroacetyl group, trichloroacetyl group or the like;
an amino group;
a C1-6 alkyl substituted amino group such as a methyl amino group, dimethyl amino group, diethyl amino group or the like;
a C6-10 aryl amino group such as an anilino group, naphthyl amino group or the like;
a C6-10 aryl C1-6 alkyl amino group such as a benzyl amino group, phenethyl amino group or the like;
a formyl amino group;
a C1-6 alkyl carbonyl amino group such as an acetyl amino group, propanoyl amino group, butyryl amino group, i-propyl carbonyl amino group or the like;
a C1-6 alkoxycarbonyl amino group such as a methoxycarbonyl amino group, ethoxycarbonyl amino group, n-propoxycarbonyl amino group, i-propoxycarbonyl amino group or the like;
an unsubstituted or substituted aminocarbonyl group such as an aminocarbonyl group, dimethyl aminocarbonyl group, phenyl aminocarbonyl group, N-phenyl-N-methyl aminocarbonyl group, 2,2,2-trifluoroethylaminocarbonyl group or the like;
an imino C1-6 alkyl group such as an iminomethyl group, (1-imino)ethyl group, (1-imino)-n-propyl group or the like;
an unsubstituted or substituted N-hydroxyimino C1-6 alkyl group such as an N-hydroxy-iminomethyl group, (1-(N-hydroxy)-imino)ethyl group, (1-(N-hydroxy)-imino)propyl group, N-methoxy-iminomethyl group, (1-(N-methoxy)-imino)ethyl group or the like;
an aminocarbonyloxy group;
a C1-6 alkyl substituted aminocarbonyloxy group such as an ethyl aminocarbonyloxy group, dimethyl aminocarbonyloxy group or the like;
a mercapto group;
a C1-6 alkyl thio group such as a methyl thio group, ethyl thio group, n-propyl thio group, i-propyl thio group, n-butyl thio group, i-butyl thio group, s-butyl thio group, t-butyl thio group or the like;
a C1-6 haloalkyl thio group such as a trifluoromethyl thio group, 2,2,2-trifluoroethyl thio group or the like;
a C6-10 aryl thio group such as a phenyl thio group, naphthyl thio group or the like;
a 5-6 membered heteroaryl thio group such as a thiazolyl thio group, pyridyl thio group or the like;
a C1-6 alkyl sulfinyl group such as a methyl sulfinyl group, ethyl sulfinyl group, t-butyl sulfinyl group or the like;
a C1-6 haloalkyl sulfinyl group such as a trifluoromethyl sulfinyl group, 2,2,2-trifluoroethyl sulfinyl group or the like;
a C6-10 aryl sulfinyl group such as a phenyl sulfinyl group or the like;
a 5-6 membered heteroaryl sulfinyl group such as a thiazolyl sulfinyl group, pyridyl sulfinyl group or the like;
a C1-6 alkyl sulfonyl group such as a methyl sulfonyl group, ethyl sulfonyl group, t-butyl sulfonyl group or the like;
a C1-6 haloalkyl sulfonyl group such as a trifluoromethyl sulfonyl group, 2,2,2-trifluoroethyl sulfonyl group or the like;
a C6-10 aryl sulfonyl group such as a phenyl sulfonyl group or the like;
a 5-6 membered heteroaryl sulfonyl group such as a thiazolyl sulfonyl group, pyridyl sulfonyl group or the like;
a C1-6 alkyl sulfonyloxy group such as a methyl sulfonyloxy group, ethyl sulfonyloxy group, t-butyl sulfonyloxy group or the like;
a C1-6 haloalkyl sulfonyloxy group such as a trifluoromethyl sulfonyloxy group, 2,2,2-trifluoroethyl sulfonyloxy group or the like;
a tri C1-6 alkyl substituted silyl group such as a trimethyl silyl group, triethyl silyl group, t-butyl dimethyl silyl group or the like;
a tri C6-10 aryl substituted silyl group such as a triphenyl silyl group or the like;
a cyano group; a nitro group.

In addition, any of the hydrogen atoms in these "substituents" may be substituted with other substituents having a different structure. In this case, examples of the "substituents" include a C1-6 alkyl group, C1-6 haloalkyl group, C1-6 alkoxy group, C1-6 haloalkoxy group, halogeno group, cyano group, nitro group and the like.
In addition, the above-described "3-6 membered heterocyclyl group" is a group having 1-4 hetetro atoms selected from the group consisting of a nitrogen atom, oxygen atom and sulfur atom as constituent atom of the ring. The heterocyclyl group may be a monoheterocyclyl group or a polyheterocyclyl group. As long as the polyheterocyclyl group includes at least one hetero ring, the remaining ring may be a saturated alicyclic ring, an unsaturated alicyclic ring or an aromatic ring. Examples of the "3-6 membered heterocyclyl group" include a 3-6 membered saturated heterocyclyl group, 5-6 membered heteroaryl group, 5-6 membered partially-unsaturated heterocyclyl group and the like.
Examples of the "3-6 membered saturated heterocyclyl group" include an aziridinyl group, epoxy group, pyrrolidinyl group, tetrahydrofuranyl group, thiazolidinyl group, piperidyl group, piperazinyl group, morpholinyl group, dioxolanyl group, dioxanyl group and the like.
Examples of the "5 membered heteroaryl group" include a pyrrolyl group, furyl group, thienyl group, imidazolyl group, pyrazolyl group, oxazolyl group, isoxazolyl group, thiazolyl group, isothiazolyl group, triazolyl group, oxadiazolyl group, thiadiazolyl group, tetrazolyl group and the like.
Examples of the "6 membered heteroaryl group" include a pyridyl group, pyrazinyl group, pyrimidinyl group, pyridazinyl group, triazinyl group and the like.

($R^1$)

Examples of the "C1-6 alkylthio group" for $R^1$ include a methylthio group, ethylthio group, n-propylthio group, i-propylthio group, n-butylthio group, i-butylthio group, s-butylthio group, t-butylthio group and the like.

Examples of the "C1 to 6 alkylsulfinyl group" for $R^1$ include a methylsulfinyl group, ethylsulfinyl group, t-butylsulfinyl group and the like.
Examples of the "C1 to 6 alkylsulfonyl group" for $R^1$ include a methylsulfonyl group, ethylsulfonyl group, t-butylsulfonyl group and the like.
The substituent on the "C1-6 alkylthio group", "C1-6 alkylsulfinyl group" and "C1-6 alkylsulfonyl group" for $R^1$ is preferably a halogeno such as a fluoro group, chloro group, bromo group, iodo group and the like.

(R2)

The "C1-6 alkyl group" for $R^2$ may be a straight chain or a branched chain. Examples of the "C1-6 alkyl group" include a methyl group, ethyl group, n-propyl group, n-butyl group, n-pentyl group, n-hexyl group, i-propyl group, i-butyl group, s-butyl group, t-butyl group, i-pentyl group, neopentyl group, 2-methylbutyl group, i-hexyl group and the like.
Examples of the substituent on the "C1-6 alkyl group" for $R^2$ include a halogeno group such as fluoro group, chloro group, bromo group, iodo group and the like.
Specific examples of the "substituted C1-6 alkyl group" include a C1-6 haloalkyl group such as fluoromethyl group, chloromethyl group, bromomethyl group, difluoromethyl group, dichloromethyl group, dibromomethyl group, trifluoromethyl group, trichloromethyl group, tribromomethyl group, 1-chloroethyl group, 2,2-difluoroethyl group, 2,2,2-trifluoroethyl group, 2-chloro-2,2-difluoroethyl group, 2,2,2-trichloroethyl group, pentafluoroethyl group, 3,3,3-trifluoropropyl group, 2,2,3,3,3-pentafluoropropyl group, 4-fluorobutyl group, 2,2,3,3,4,4,4-heptafluorobutyl group, 4-chlorobutyl group, 2,2,2-trifluoro-1-trifluoromethylethyl group, 1,1,1,3,3,3-hexafluoropropane-2-yl group, perfluoropropane-2-yl group, perfluorohexyl group, perchlorohexyl group, 2,4,6-trichlorohexyl group and the like.

(R)

The "C1-6 haloalkyl group" for R is a C1-6 alkyl group substituted with a halogeno group such as a fluoro group, chloro group, bromo group, iodo group or the like, and examples thereof include a fluoromethyl group, difluoromethyl group, trifluoromethyl group, 2,2,2-trifluoroethyl group, pentafluoroethyl group, 3,3,3-trifluoropropyl group, 2,2,3,3,3-pentafluoropropyl group, 1-chloro-2,2,3,3,3-pentafluoropropyl group, 1,2,2,3,3,3-hexafluoropropyl group, perfluoropropyl group, 2,2,2-trifluoro-1-trifluoromethylethyl group, perfluoroisopropyl group, 4-fluorobutyl group, 1,4,4,4-tetrafluorobutyl group, 2,2,3,3,4,4,4-heptafluorobutyl group, 1,2,2,3,3,4,4,4-octafluorobutyl group, perfluorobutyl group, 3,3,3-trifluoro-2-trifluoromethylpropyl group, 1-chloro-2,3,3,3-tetrafluoro-2-trifluoromethylpropyl group, 1,2,3,3,3-pentafluoro-2-trifluoromethylpropyl group, 2,2,3,3,4,4,5,5,5-nonafluoropentyl group, 1-chloro-2,2,3,3,4,4,5,5,5-nonafluoropentyl group, 1,2,2,3,3,4,4,5,5,5-decafluoropentyl group, perfluoropentyl group, perfluorohexyl group, chloromethyl group, bromomethyl group, dichloromethyl group, dibromomethyl group, trichloromethyl group, tribromomethyl group, 1-chloroethyl group, 2,2,2-trichloroethyl group, 4-chlorobutyl group, perchlorohexyl group, 2,4,6-trichlorohexyl group and the like.
The "C2-6 haloalkenyl group" for R is a C2-6 alkenyl group substituted with a halogeno group such as a fluoro group, chloro group, bromo group, iodo group or the like, and examples thereof include a C2-6 alkenyl group such as 2-fluoro-2-bromovinyl group, 2,2-dichlorovinyl group, 2-chloro-2-iodovinyl group, 2-chloro-1-propenyl group, 2,3,3,3-tetrafluoro-1-propenyl group, 3,3,3-trifluoro-1-propenyl group, 2-chloro-3,3,3-trifluoro-1-propenyl group, 2-bromo-3,3,3-trifluoro-1-propenyl group, 3,3,3-trifluoro-2-trifluoromethyl-1-propenyl group, 2-fluoro-1-butenyl group, 3,3,4,4,4-pentafluoro-1-butenyl group, 2,3,3,4,4,4-hexafluoro-1-butenyl group, 2-chloro-3,3,4,4,4-pentafluoro-1-butenyl group, 3,3,4,4,5,5,5-heptafluoro-1-pentenyl group, 2-chloro-3,3,4,4,5,5,5-heptafluoro-1-pentenyl group, 2,3,3,4,4,5,5,5-octafluoro-1-pentenyl group, 3,3,4,4,5,5,6,6,6-nonafluoro-1-hexenyl group and the like.

(X)

As the "substituted or unsubstituted C1-6 alkyl groups" for X, the same as those specifically exemplified for $R^2$ can be mentioned.
As the "substituted or unsubstituted C1-6 alkylthio group", the "substituted or unsubstituted C1-6 alkylsulfinyl group" and the "substituted or unsubstituted C1-6 alkylsulfonyl group" for X, the same as those specifically exemplified for $R^1$ can be mentioned.
Examples of the "C2-6 alkenyl group" for X include a vinyl group, 1-propenyl group, 2-propenyl group, 1-butenyl group, 2-butenyl group, 3-butenyl group, 1-methyl-2-propenyl group, 2-methyl-2-propenyl group, 1-pentenyl group, 2-pentenyl group, 3-pentenyl group, 4-pentenyl group, 1-methyl-2-butenyl group, 2-methyl-2-butenyl group, 1-hexenyl group, 2-hexenyl group, 3-hexenyl group, 4-hexenyl group, 5-hexenyl group and the like.
Examples of the "C2-6 alkynyl group" for X include an ethynyl group, 1-propynyl group, 2-propynyl group, 1-butynyl group, 2-butynyl group, 3-butynyl group, 1-methyl-2-propynyl group, 2-methyl-3-butynyl group, 1-pentynyl group, 2-pentynyl group, 3-pentynyl group, 4-pentynyl group, 1-methyl-2-butynyl group, 2-methyl-3-pentynyl group, 1-hexynyl

group, 1,1-dimethyl-2-butynyl group and the like.

Examples of the "C1-6 alkoxy group" for X include a methoxy group, ethoxy group, n-propoxy group, i-propoxy group, n-butoxy group, s-butoxy group, i-butoxy group, t-butoxy group and the like.

Examples of the "C1-6 alkylcarbonyl group" for X include an acetyl group, propionyl group and the like.

Examples of the "C1-6 alkoxycarbonyl group" for X include a methoxycarbonyl group, ethoxycarbonyl group, n-propoxycarbonyl group, i-propoxycarbonyl group, t-butoxycarbonyl group and the like.

As the substituent on the "C2-6 alkenyl group", "C2-6 alkynyl group", "C1-6 alkoxy group", "C1-6 alkylcarbonyl group" and the "C1-6 alkoxycarbonyl group" for X, a halogeno group such as fluoro group, chloro group, bromo group, iodo group or the like; and cyano group can be preferably mentioned.

Examples of the "C3-8 cycloalkyl group" for X include a cyclopropyl group, cyclobutyl group, cyclopentyl group, cyclohexyl group and the like.

The "C6-10 aryl group" for X is a group formed by removing one hydrogen on the ring of a monocyclic or polycyclic aromatic hydrocarbon. Examples of the "C6-10 aryl group" include a phenyl group, naphthyl group and the like.

The "5- to 6-membered heteroaryl group" for X is a 5- to 6-membered aryl group having an oxygen atom, a nitrogen atom or a sulfur atom as a heterologous atom, and examples thereof include a 6-membered heteroaryl group such as a pyridyl group, pyrazinyl group, pyrimidinyl group, pyridadinyl group, triazinyl group and the like; a 5-membered heteroaryl groups such as a pyrrolyl group, furyl group, thienyl group, imidazolyl group, pyrazolyl group, oxazolyl group, isooxazolyl group, thiazolyl group, isothiazolyl group, triazolyl group, oxadiazolyl group, thiadiazolyl group and tetrazolyl group; and the like.

As the substituent on the "C3-8 cycloalkyl group", "C6-10 aryl group" and "5-6 membered heteroaryl group" for X, a halogeno group such as a fluoro group, chloro group, bromo group, iodo group or the like; a C1-6 haloalkyl group such as a trifluoromethyl group, 2,2,2-trifluoroethyl group, perfluoroethyl group or the like; and a cyano group can be preferably mentioned.

The "substituted or unsubstituted amino group" for X is a group represented by "-$NR^aR^b$" or the like. In the formula, $R^a$ and $R^b$ each independently represents a hydrogen atom, a C1-6 alkyl group, C3-8 cycloalkyl group, formyl group, C1-6 alkylcarbonyl group, or a C3-8 cycloalkylcarbonyl groups.

Examples of the "C1-6 alkyl group" for $R^a$ and $R^b$ include the same as those specifically exemplified for $R^2$.

Examples of the "C1-6 alkylcarbonyl group" and "C3-8 cycloalkyl group" for $R^a$ and $R^b$ include the same as those specifically exemplified for X.

Examples of the "C3-8 cycloalkylcarbonyl group" for $R^a$ and $R^b$ include a cyclopropylcarbonyl group, cyclobutylcarbonyl group, cyclopentylcarbonyl group and the like.

Examples of the "halogeno group" for X include a fluoro group, chloro group, bromo group, iodo group and the like.

The salt of the compound represented by formula (I) is not particularly limited as long as it is a horticulturally acceptable salt. For example, salts of inorganic acids such as hydrochloric acid, sulfuric acid or the like; salts of organic acids such as acetic acid, lactic acid or the like; salts of alkali metals such as lithium, sodium, potassium or the like; salts of alkaline earth metals such as calcium, magnesium and the like; salts of transition metals such as iron, copper and the like; salts of organic bases such as triethylamine, tributylamine, pyridine, hydrazine or the like; ammonium salts; and the like.

The compound represented by formula (I) can be produced according to a known production method, for example, the method described in Patent Document 1. The salt of the compound represented by formula (I) can be obtained from the compound represented by formula (I) by a known method.

The compound (I) is preferably a compound represented by formula (II) or formula (III).

[Chemical formula 4]

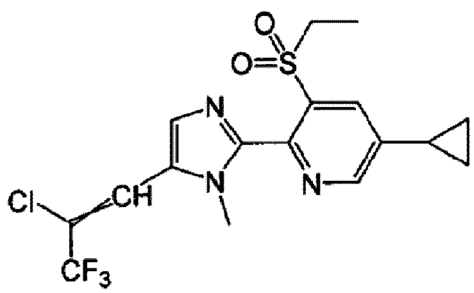

(II)

The carbon-carbon double stereo bond in formula (II) represents an E-form, Z-form or a mixture thereof.

[Chemical formula 5]

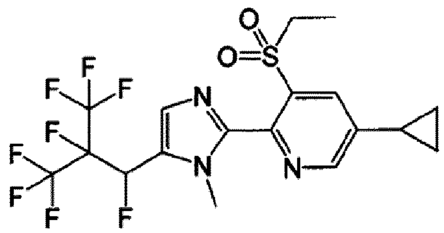

(III)

The term "seed treatment" as used herein refers to any form of seed treatment known to a skilled person wherein a seed is bated, dipped or coated with at least one active ingredient (such as a nematicide, an insecticide or a fungicide). A seed treatment is performed prior to planting a seed.

The term "exogenous treatment of seed" as used herein refers to applications of at least one active ingredient (such as a nematicide, an insecticide or a fungicide) to the soil surrounding a seed or the soil in which the seed is planted. The application to the soil can be performed before planting the seed, while planting the seed or after planting the seed. One example of such a treatment is in furrow application.

The term "soil-dwelling grub" as used herein refers to the immature, wingless, and often worm-like feeding form that hatches from the egg of an insect and is finally transformed into a pupa or chrysalis from which the adult emerges. Examples of the soil-dwelling grub include coleopteran pests such as Diabrotica balteata, Diabrotica virgifera, Popillia species, Agriotes species, or Bruchus species, phyllotreta species; and lepidopteran pests such as Agrotis segetum.

The term "cereal" as used herein refers to seeds or plants or plant parts of wheat, barley, rye, oats and millet, sorghum, triticale, fonio, buckwheat (Polygonaceae), quinoa (Amaranthaceae) and chia (Lamiaceae).

The term "control" insects as used herein means a mortality rate of a pest of at least 70%, more preferably 80%, even more preferably 90% and the mortality rate is determined in % seven days after infestation of a seed or the surrounding soil of a seed with said pest compared to untreated seed control (untreated seed or untreated soil and untreated seed, respectively) under green-house conditions. Greenhouse conditions are suitable to avoid immigration of further pests of the same (or a different) type.

[Seed treatment, Application to seeds]

In particular, the present invention also relates to a method for protecting seed and germinating plants from attack by pests, by treating the seed with the compound (I). The method of the invention for protecting seed and germinating plants from attack by pests includes a method in which the seed is treated simultaneously in one operation with the compound (I) and co-components and optionally with at least one further pesticide such as a nematicide, an insecticide or a fungicide. It also includes a method in which the seed is treated at different times with the compound (I) and co-components before planting the seed. Co-components are customary adjuvants, such as customary extenders as well as solvents or diluents, colorants, wetters, dispersants, emulsifiers, antifoams, preservatives, secondary thickeners, stickers, gibberellins, and also water. Nematicides, insecticides or fungicides are not co-components in this sense.

Seed treatment as used herein refers to methods known in the art for treating seeds with the compound (I) prior to planting such a seed (into a matrix such as soil, agar or another solid medium, preferably soil).

The invention likewise relates to the use of the compound (I) for treating seed for the purpose of protecting the seed and the resultant plant against animal pests.

The invention relates, furthermore, to seed that has been treated with the compound (I) for protection against animal pests. The invention also relates to seed which at the same time has been treated with the compound (I) and co-components. The invention further relates to seed which has been treated at different times with the compound (I) and co-components. In the case of seed which has been treated at different times with the compound (I) and co-components, the individual active ingredients in the composition of the invention may be present in different layers on the seed. In this case, the layers which comprise the compound (I) and co-components may optionally be separated by an intermediate layer. The invention also relates to seed in which the compound (I) and co-components have been applied as a constituent of a coating or as a further layer or further layers in addition to a coating.

Furthermore, the invention relates to seed which, following treatment with the compound (I), is subjected to a film-coating process in order to prevent dust abrasion of the seed.

One of the advantages of the present invention is that, owing to the unique systemic properties of the compositions of the invention, the treatment of the seed with these compositions provides protection from animal pests not only to the seed itself but also to the plants originating from the seed, after they have germinated. In this way, it may not be necessary to treat the crop directly at the time of sowing or shortly thereafter.

It is likewise considered to be advantageous that the compound (I) may also be used on transgenic seed in particular.

It is also known that the compound (I) may be used in combination with signalling technology agents, as a result of which, for example, colonization with symbionts is improved, such as rhizobia, mycorrhiza and/or endophytic bacteria, for example, is enhanced, and/or nitrogen fixation is optimized.

The compositions of the invention are suitable for protecting seed of any variety of plant which is used in agriculture, in greenhouses, in forestry or in horticulture. More particularly, the seed in question is that of cereals (e.g. wheat, barley, rye, oats and millet), maize, cotton, soybeans, rice, potatoes, sunflower, coffee, tobacco, canola, oilseed rape, beets (e.g. sugar beet and fodder beet), peanuts, vegetables (e.g. tomato, cucumber, bean, brassicas, onions and lettuce), fruit plants, lawns and ornamentals. Particularly important is the treatment of cereal seeds (such as wheat, barley, rye, millet and oats), maize, soybeans, cotton, canola, oilseed rape and rice.

The methods are preferably used in connection with corn seeds. Preferably the corn seeds are those that are agronomically important.

The seed, preferably corn seed, may be a transgenic seed from which a transgenic plant can grow, preferably a corn seed from which a transgenic corn plant can grow, and incorporates a transgenic event that confers, for example, tolerance to a particular herbicide or combination of herbicides, increased disease resistance, enhanced tolerance to insects, drought, stress and/or enhanced yield. The seed may comprise a breeding trait, including, for example, a disease tolerant breeding trait in one embodiment. In another embodiment, a seed, preferably a corn seed, includes at least one transgenic and at least one breeding trait.

The seed treatment method according to the invention may comprise applying a seed treatment composition comprising the compound (I) to a seed, preferably a corn seed. Thus, the seed treatment method according to the invention may comprise applying a seed treatment composition comprising the compound (I) to a seed, preferably a corn seed, prior to sowing the seed.

In a specific embodiment, the method may comprise applying a seed treatment composition containing as sole active ingredient (nematicide, fungicide or insecticide) the compound (I) to a seed, preferably a corn seed. When applying a seed treatment composition to a seed prior to sowing the seed in this manner, seeds can be treated, for example, at a central location and then distributed for planting. This may permit a person who plants the seeds to avoid the complexity and effort associated with handling and applying the seed treatment compositions, and to merely plant the treated seeds in a manner that is conventional for regular untreated seeds.

The seeds of the present invention are generally plants containing at least one heterologous gene that regulates the expression of polypeptides having, in particular, insecticidal and/or nematicidal properties. These heterologous genes in transgenic seeds may come from microorganisms such as Bacillus, Rhizobium, Pseudomonas, Serratia, Trichoderma, Clavibacter, Glomus or Gliocladium. The present invention is particularly suitable for the treatment of transgenic seeds which contain at least one heterologous gene from Bacillus sp. It is particularly preferable that the heterologous gene comes from Bacillus thuringiensis.

For the purposes of the present invention, the compound (I) is applied alone or in a suitable formulation to the seed. The seed is preferably treated in a condition in which its stability is such that no damage occurs in the course of the treatment. Generally speaking, the seed may be treated at any point in time between harvesting and sowing. Typically, seed is used which has been separated from the plant and has had cobs, hulls, stems, husks, hair or pulp removed. Thus, for example, seed may be used that has been harvested, cleaned and dried to a moisture content of less than 15% by weight. Alternatively, seed can also be used that has been dried, treated with water after drying, for example, and then dried again.

When treating seed it is necessary, generally speaking, to ensure that the amount of the composition of the invention, and/or of other additives, that is applied to the seed is selected such that the germination of the seed is not adversely affected, and/or that the plant which emerges from the seed is not damaged. This is the case in particular with active ingredients which may exhibit phytotoxic effects at certain application doses.

The compound (I) which can be used in accordance with the invention may be converted into customary seed-dressing formulations, such as solutions, emulsions, suspensions, powders, foams, slurries or other coating compositions for seed, and also LTLV formulations.

These formulations are prepared in a known manner, by mixing the compound (I) with customary adjuvants, such as, for example, customary extenders and also solvents or diluents, colorants, wetters, dispersants, emulsifiers, antifoams, preservatives, secondary thickeners, stickers, gibberellins, and also water.

Colorants which may be present in the seed-dressing formulations which can be used in accordance with the invention include all colorants which are customary for such purposes. In this context it is possible to use not only pigments which have low solubility in water, but also water-soluble dyes.

Wetters which may be present in the seed-dressing formulations which can be used in accordance with the invention include all of the substances which promote wetting and which are customary in the formulation of active agrochemical ingredients. Use may be made preferably of alkylnaphthalenesulphonates, such as diisopropyl- or diisobutylnaphthalenesulphonates.

Dispersants and/or emulsifiers which may be present in the seed-dressing formulations which can be used in accordance with the invention include all of the nonionic, anionic and cationic dispersants that are customary in the formulation of active agrochemical ingredients. Use may be made preferably of nonionic or anionic dispersants or of mixtures of nonionic or anionic dispersants. Suitable nonionic dispersants are, in particular, ethylene oxide -propylene oxide block polymers, alkylphenol polyglycol ethers and also tristryrylphenol polyglycol ethers, and the phosphated or sulphated derivatives of these. Suitable anionic dispersants are, in particular, lignosulphonates, salts of polyacrylic acid, and arylsulphonate-formaldehyde condensates.

Antifoams which may be present in the seed-dressing formulations which can be used in accordance with the invention include all of the foam inhibitors that are customary in the formulation of active agrochemical ingredients. Use may be made preferably of silicone anti foams and magnesium stearate.

Preservatives which may be present in the seed-dressing formulations which can be used in accordance with the invention include all of the substances which can be employed for such purposes in agrochemical compositions. Examples include dichlorophen and benzyl alcohol hemiformal.

Secondary thickeners which may be present in the seed-dressing formulations which can be used in accordance with the invention include all substances which can be used for such purposes in agrochemical compositions. Those considered preferable include cellulose derivatives, acrylic acid derivatives, xanthan, modified clays and highly dispersed silica.

Stickers which may be present in the seed-dressing formulations which can be used in accordance with the invention include all customary binders which can be used in seed-dressing products. Preferred mention may be made of polyvinylpyrrolidone, polyvinyl acetate, polyvinyl alcohol and tylose.

Gibberellins which may be present in the seed-dressing formulations which can be used in accordance with the invention preferably include the gibberellins A1, A3 (= gibberellic acid), A4 and A7, with gibberellic acid being particularly preferable.

The seed-dressing formulations which can be used in accordance with the invention may be used, either directly or after prior dilution with water, to treat seed of any of a wide variety of types. Accordingly, the concentrates or the preparations obtainable from them by dilution with water may be employed to dress the seed of cereals, such as wheat, barley, rye, oats and triticale, and also the seed of maize, rice, oilseed rape, peas, beans, cotton, sunflowers and beets, or the seed of any of a wide variety of vegetables. The seed-dressing formulations which can be used in accordance with the invention, or their diluted preparations, may also be used to dress seed of transgenic plants. In that case, additional synergistic effects may occur in interaction with the substances formed through expression.

For the treatment of seed with the seed-dressing formulations which can be used in accordance with the invention, or with the preparations produced from them by addition of water, suitable mixing equipment includes all such equipment which can typically be employed for seed dressing. More particularly, the procedure when carrying out seed dressing is to place the seed in a mixer, to add the particular desired amount of seed-dressing formulations, either as such or following dilution with water beforehand, and to carry out mixing until the distribution of the formulation on the seed is uniform. This may be followed by a drying operation.

The application rate of the seed-dressing formulations which can be used in accordance with the invention may be varied within a relatively wide range. This is determined by the particular amount of the compound (I) in the formulations, and by the seed. The application rates in the case of the compound (I) are generally between 0.001 and 50 g per kilogram of seed, preferably between 0.01 and 15 g per kilogram of seed. For example, in one aspect, the method comprises applying the compound (I) to a seed, wherein the application rate of the compound (I) is at least about 0.1 grams per kilogram of seed or at least 0.15 grams per kilogram of seed, 0.3 grams per kilogram of seed, 0.45 grams per kilogram of seed, 0.6 grams per kilogram of seed, 0.75 grams per kilogram of seed, or 0.9 grams per kilogram of seed. The method may comprise applying the compound (I) at an application rate of from 0.3 to 0.9, from 0.45 to 0.75, or from 0.5 to 0.6 grams per kilogram of seed.

The seed treatment composition can be applied to seeds by any standard seed treatment methodology, including but not limited to mixing in a container (e.g., a bottle or bag), mechanical application, tumbling, spraying, immersion, and solid matrix priming. Any conventional active or inert material can be used for contacting seeds with the seed treatment composition, such as conventional film coating materials including but not limited to water-based film coating materials.

For example, the seed treatment composition can be introduced onto or into a seed by use of solid matrix priming. For example, a quantity of the seed treatment composition can be mixed with a solid matrix material and then the seed can be placed into contact with the solid matrix material for a period to allow the seed treatment composition to be introduced to the seed. The seed can then optionally be separated from the solid matrix material and stored or

used, or the mixture of solid matrix material plus seed can be stored or planted directly. Non-limiting examples of solid matrix materials which are useful include polyacrylamide, starch, clay, silica, alumina, soil, sand, polyurea, polyacrylate, or any other material capable of absorbing or adsorbing the seed treatment composition for a time and releasing the compound (I) of the seed treatment composition into or onto the seed. It is useful to make sure that the fungicide(s) and the solid matrix material are compatible with each other. For example, the solid matrix material should be chosen so that it can release the compound (I) at a reasonable rate, for example over a period of minutes, hours, days, or weeks.

Imbibition is another method of treating seed with the seed treatment composition. For example, a plant seed can be directly immersed for a period of time in the seed treatment composition. During the period that the seed is immersed, the seed takes up, or imbibes, a portion of the seed treatment composition. Optionally, the mixture of plant seed and the seed treatment composition can be agitated, for example by shaking, rolling, tumbling, or other means. After imbibition, the seed can be separated from the seed treatment composition and optionally dried, for example by patting or air drying.

The seed treatment composition may be applied to the seeds using conventional coating techniques and machines, such as fluidized bed techniques, the roller mill method, rotostatic seed treaters, and drum coaters. Other methods, such as spouted beds may also be useful. The seeds may be pre-sized before coating. After coating, the seeds are typically dried and then transferred to a sizing machine for sizing. Such procedures are generally known in the art.

If the seed treatment composition is applied to the seed in the form of a coating, the seeds can be coated using a variety of methods known in the art. For example, the coating process can comprise spraying the seed treatment composition onto the seed while agitating the seed in an appropriate piece of equipment such as a tumbler or a pan granulator.

When coating seed on a large scale (for example a commercial scale), the seed coating may be applied using a continuous process. Typically, seed is introduced into the treatment equipment (such as a tumbler, a mixer, or a pan granulator) either by weight or by flow rate. The amount of treatment composition that is introduced into the treatment equipment can vary depending on the seed weight to be coated, surface area of the seed, the concentration of the fungicide(s) and/or other active ingredients in the treatment composition, the desired concentration on the finished seed, and the like. The treatment composition can be applied to the seed by a variety of means, for example by a spray nozzle or revolving disc. The amount of liquid may be determined by the assay of the formulation and the required rate of active ingredient necessary for efficacy. As the seed falls into the treatment equipment, the seed can be treated (for example by misting or spraying with the seed treatment composition) and passed through the treater under continual movement/tumbling where it can be coated evenly and dried before storage or use.

Alternatively, the seed coating may be applied using a batch process. For example, a known weight of seeds can be introduced into the treatment equipment (such as a tumbler, a mixer, or a pan granulator). A known volume of seed treatment composition can be introduced into the treatment equipment at a rate that allows the seed treatment composition to be applied evenly over the seeds. During the application, the seed can be mixed, for example by spinning or tumbling. The seed can optionally be dried or partially dried during the tumbling operation. After complete coating, the treated sample can be removed to an area for further drying or additional processing, use, or storage.

In a further alternative embodiment, the seed coating may be applied using a semi -batch process that incorporates features from each of the batch process and continuous process embodiments set forth above.

Seeds can be coated in laboratory size commercial treatment equipment such as a tumbler, a mixer, or a pan granulator by introducing a known weight of seeds in the treater, adding the desired amount of seed treatment composition, tumbling or spinning the seed and placing it on a tray to thoroughly dry.

Seeds can also be coated by placing the known amount of seed into a narrow neck bottle or receptacle with a lid. While tumbling, the desired amount of seed treatment composition can be added to the receptacle. The seed is tumbled until it is coated with the treatment composition. After coating, the seed can optionally be dried, for example on a tray.

The treated seeds may also be enveloped with a film overcoating to protect the insecticidal coating. Such overcoatings are known in the art and may be applied using conventional fluidized bed and drum film coating techniques. The overcoatings may be applied to seeds that have been treated with any of the seed treatment techniques described above, including but not limited to solid matrix priming, imbibition, coating, and spraying, or by any other seed treatment technique known in the art.

[Seed, Plant, or Soil Treatment Composition]

Another embodiment of the present invention is generally related to a treatment composition comprising the compound (I) for use in accordance with the methods or for preparation of the treated seeds described herein.

In some embodiments, the treatment composition may be an aqueous composition.

Generally, the treatment compositions described herein can comprise any adjuvants, excipients, or other desirable components known in the art. For example, in some embodiments, the treatment composition further comprises a surfactant.

Examples of anionic surfactants include alkyl sulfates, alcohol sulfates, alcohol ether sulfates, alpha olefin sulfonates, alkylaryl ether sulfates, arylsulfonates, alkylsulfonates, alkylaryl sulfonates, sulfosuccinates, mono- or diphosphate esters of polyalkoxylated alkyl alcohols or alkyl phenols, mono-or disulfosuccinate esters of alcohols or polyalkoxylated alkanols, alcohol ether carboxylates, phenol ether carboxylates. In one embodiment, the surfactant is an alkylaryl sulfonate.

Non-limiting examples of commercially available anionic surfactants include sodium dodecylsulfate (Na-DS, SDS), MORWET D-425 (a sodium salt of alkyl naphthalene sulfonate condensate, available from Akzo Nobel), MORWET D-500 (a sodium salt of alkyl naphthalene sulfonate condensate with a block copolymer, available from Akzo Nobel), sodium dodecylbenzene sulfonic acid (Na-DBSA) (available from Aldrich), diphenyloxide disulfonate, naphthalene formaldehyde condensate, DOWFAX (available from Dow), dihexylsulfosuccinate, and dioctylsulfosuccinate, alkyl naphthalene sulfonate condensates, and salts thereof.

Examples of non-ionic surfactants include sorbitan esters, ethoxylated sorbitan esters, alkoxylated alkylphenols, alkoxylated alcohols, block copolymer ethers, and lanolin derivatives. In accordance with one embodiment, the surfactant comprises an alkylether block copolymer.

Non-limiting examples of cationic surfactants include mono alkyl quaternary amine, fatty acid amide surfactants, amidoamine, imidazoline, and polymeric cationic surfactants.

In some embodiments, the treatment composition comprises a co-solvent in addition to water. Non-limiting examples of co-solvents that can be used include ethyl lactate, methyl soyate/ethyl lactate co-solvent blends (e.g., STEPOSOL, available from Stepan), isopropanol, acetone, 1,2-propanediol, n-alkylpyrrolidones (e.g., the AGSOLEX series, available from ISP), a petroleum based-oil (e.g., AROMATIC series and SOLVESSO series available from Exxon Mobil), isoparaffinic fluids (e.g. ISOPAR series, available from Exxon Mobil), cycloparaffinic fluids (e.g. NAPPAR 6, available from Exxon Mobil), mineral spirits (e.g. VARSOL series available from Exxon Mobil), and mineral oils (e.g., paraffin oil).

Examples of commercially available organic solvents include pentadecane, ISOPAR M, ISOPAR V, and ISOPAR L (available from Exxon Mobil).

In some embodiments, the treatment composition comprising the compound (I), may be formulated, mixed in a seed treater tank, combined on the seed by overcoating, or combined with one or more additional active ingredients. The additional active ingredients may comprise, for example, an insecticide, a fungicide or a biological agent. In some embodiments, the treatment composition comprises the compound (I) and another pesticide, for example a nematicide, insecticide, fungicide, and/or herbicide.

In some embodiments, the treatment composition comprises the compound (I) and a biological agent. In one embodiment the treatment composition comprises the compound (I) as the sole insecticide; in another embodiment, the treatment composition comprises the compound (I) as the sole nematicide, insecticide or fungicide (i.e. no other nematicide, insecticide or fungicide is present).

Examples of the additional active ingredients are shown below.

(Active ingredient of insecticide or acaricide)

These are the active ingredients of insecticides or acaricides that have an action mechanism classified by the IRAC code.

Examples of the insecticidal or acaricidal agent having an action mechanism classified by the IRAC code include (1A) acetylcholinesterase inhibitor (AChE), (1B) acetylcholinesterase (AChE) inhibitor (organophosphorus), (2) GABA-gated chloride ion (chlorine ion) channel blocker, (3A) sodium channel modulator (pyrethroid), (3B) sodium channel modulator (DDTs), (4) nicotinic acetylcholine receptor (nAChR) competitive modulator, (5) nicotinic acetylcholine receptor (nAChR) allosteric modulator, (6) glutamate-gated chloride ion (chlorine ion) channel (GluCl) allosteric modulator, (7) juvenile hormone analogs, (8) other non-specific (multi-site) inhibitors, (9) chordotonal organ TRPV channel modulator, (10) acari growth inhibitor, (11) microorganism-derived insect midgut inner membrane disrupting agent, (12) mitochondrial ATP synthase inhibitor, (13) oxidative phosphorylation uncoupler that disrupts proton gradient, (14) nicotinic acetylcholine receptor (nAChR) channel blocker, (15) chitin biosynthesis inhibitor type 0, (16) chitin biosynthesis inhibitor type 1, (17) insect molting inhibitor, (18) molting hormone (ecdysone) receptor agonist, (19) octopamine receptor agonist, (20) mitochondrial electron transport chain complex III inhibitor, (21) mitochondrial electron transport chain complex I inhibitor (MET I), (22) voltage-dependent sodium channel blocker, (23) acetyl CoA carboxylase inhibitor, (24) mitochondrial electron transport chain complex IV inhibitor, (25) mitochondrial electron transport chain complex III inhibitor, (28) ryanodine receptor modulator, (29) chordotonal organ modulator (target site unspecified), (30) GABA-gated chloride ion (chlorine ion) channel allosteric modulator, and (UN) agent with unclear or unknown action mechanism.

Specific examples of the above-described compounds are shown below.

(1A) Acetylcholinesterase inhibitor (AChE):
Alanycarb, Aldicarb, Bendiocarb, Benfuracarb, Butocarboxim, Butoxycarboxim, Carbaryl, Carbofuran, Carbosulfan, Ethiofencarb, Fenobucarb, Formetanate, Furathiocarb, Isoprocarb, Methiocarb, Methomyl, Metolcarb, Oxam Pirimicarb, Propoxur, Thiodicarb, Thiofanox, Triazamate, Trimethacarb, XMC, Xylylcarb.
(1B) Acetylcholinesterase (AChE) inhibitor (organophosphorus):
Acephate, Azamethiphos, Azinphos-ethyl, Azinphosmethyl, Cadusafos, Chlorethoxyfos, Chlorfenvinphos, Chlormephos, Chlorpyrifos, Chlorpyrifos-methyl, Coumaphos, Cyanophos, Demeton-S-methyl, Diazinon, Dichlorvos/DDVP, Dicrotophos, Dimethoate, Dimethylvinphos, Disulfoton, EPN, Ethion, Ethoprophos, Famphur, Fenamiphos, Fenitrothion, Fenthion, Fosthiazate, Heptenophos, Imicyafos, Isofenphos, Isopropyl O- (methoxyaminothio-phosphoryl) salicylate, Isoxathion, Malathion Mecarbam, Methamidophos, Methidathion, Mevinphos, Monocrotophos, Naled, Omethoate, Oxydemeton-methyl, Parathion, Parathion-methyl, Phenthoate, Phorate, Phosalone, Phosmet, Phosphamidon, Phoxim, Pirimiphos-methyl, Profenofos, Propetamphos, Prothiofos, Pyraclofos, Pyridaphenthion, Quinalphos, Sulfotep, Tebupirimfos, Temephos, Terbufos, Tetrachlorvinphos, Thiometon, Triazophos, Trichlorfon, Vamidothion..
(2) GABA-gated chloride ion (chlorine ion) channel blocker:
Chlordane, Endosulfan, Ethiprole, Fipronil, Flufiprole.
(3A) Sodium channel modulator (pyrethroid):
Acrinathrin, Allethrin, d-cis-trans-Allethrin, d-trans-Allethrin, Bifenthrin, Bioallethrin, Bioallethrin S-cyclopentenylisomer, Bioresmethrin, Cycloprothrin, Cyfluthrin, β-Cyfluthrin, Cyhalothrin, λ-Cyhalothrin, γ-Cyhalothrin, Cypermethrin, α-Cypermethrin, β-Cypermethrin, θ-Cypermethrin, ζ-cypermethrin, Cyphenothrin [(1R)-trans-isomers], Deltamethrin, Empenthrin [(EZ)-(1R)-isomers], Esfenvalerate, Etofenprox, Fenpropathrin, Fenvalerate, Flucythrinate, Flumethrin, τ-Fluvalinate, Halfenprox, Imiprothrin, Kadethrin, Permethrin, Phenothrin [(1R)-trans-isomer], Prallethrin, Pyrethrins, Resmethrin, Silafluofen, Tefluthrin, Tetramethrin, Tetramethrin [(1R)-isomers], Tralomethrin, Transfluthrin, κ-Bifenthrin, Chloroprallethrin, Heptafluthrin, Meperfluthrin, ε-Metofluthrin, Momfluorothrin, ε-Momfluorothrin, κ-Tefluthrin, Tetramethylfluthrin, Bioethanomethrin.
(3B) Sodium channel modulator (DDTs):
DDT, Methoxychlor.
(4) Nicotinic acetylcholine receptor (nAChR) competitive modulator:
Acetamiprid, Clothianidin, Dinotefuran, Imidacloprid, Nitenpyram, Thiacloprid, Thiamethoxam, Nicotine, Triflumezopyrim, Dicloromezotiaz, Flupyrimin.
(5) Nicotinic acetylcholine receptor (nAChR) allosteric modulator:
Spinetoram, Spinosad.
(6) Glutamate-gated chloride ion (chlorine ion) channel (GluCl) allosteric modulator:
Abamectin, Emamectin-benzoate, Lepimectin, Milbemectin, Doramectin, Eprinomectin, Ivermectin, Moxidectin, Selamectin.
(7) Juvenile hormone analogs:
Hydroprene, Kinoprene, Methoprene; Fenoxycarb; Pyriproxifen.
(8) Other non-specific (multi-site) inhibitors:
Methyl bromide, alkyl halides, Chloropicrin, Sodium aluminum fluoride, Sulfuryl fluoride, Borax, Boric acid), Disodium octaborate, Sodium borate, Sodium metaborate, Tartar emetic, Dazomet, Metam.
(9) Chordotonal organ TRPV channel modulator:
Pymetrozine, Pyrifluquinazon, Afidopyropen.
(10) Acari growth inhibitor:
Clofentezine, Diflovidazin, Hexythiazox, Etoxazole.
(11) Microorganism-derived insect midgut inner membrane disrupting agent:
B.t. subsp. Israelensis, B.t. subsp. Aizawai, B.t. subsp. kurstaki, B.t. subsp. Tenebrionis, B.t. crop proteins: Cry1Ab, Cry1Ac, Cry1Fa, Cry1A. 105, Cry2Ab, Vip3A, mCry3A, Cry3Ab, Cry3Bb, Cry34Ab1/Cry35Ab1, Bacillus sphaericus.
(12) Mitochondrial ATP synthase inhibitor:
Diafenthiuron, Azocyclotin, Cyhexatin, Fenbutatin-oxide, Propargite; Tetradifon.
(13) Oxidative phosphorylation uncoupler that disrupts proton gradient:
Chlorfenapyr, DNOC (4,6-dinitro-o-cresol), Sulfluramid.
(14) Nicotinic acetylcholine receptor (nAChR) channel blocker:
Bensultap, Cartap hydrochloride, Thiocyclam, Thiosultap-sodium.
(15) Chitin biosynthesis inhibitor type 0:
Bistrifluron, Chlorfluazuron, Diflubenzuron, Flucycloxuron, Flufenoxuron, Hexaflumuron, Lufenuron, Novalron), Noviflumuron, Teflubenzuron, Triflumuron.
(16) Chitin biosynthesis inhibitor type 1:
Buprofezin.

(17) Insect molting inhibitor,
Cyromazine.
(18) Molting hormone (ecdysone) receptor agonist:
Chromafenozide, Halofenozid, Methoxyfenozide, Tebufenozide.
(19) Octopamine receptor agonist:
Amitraz.
(20) Mitochondrial electron transport chain complex III inhibitor,
Hydramethylnon, Acequinocyl, Fluacrypyrim, Bifenazate.
(21) Mitochondrial electron transport chain complex I inhibitor (MET I),
Fenazaquin, Fenpyroximate, Pyridaben, Pyrimidifen, Tebufenpyrad, Tolfenpyrad, Rotenone.
(22) Voltage-dependent sodium channel blocker:
Indoxacarb, Metaflumizone.
(23) Acetyl CoA carboxylase inhibitor:
Spirodiclofen, Spiromesifen, Spirotetramat, Spiropidion.
(24) Mitochondrial electron transport chain complex IV inhibitor:
Al-phosphide, Ca-phosphide, Phosphine, Zn-phosphide; Ca-cyanide, Na-cyanide, K-cyanide.
(25) Mitochondrial electron transport chain complex II inhibitor:
Cyenopyrafen, Cyflumetofen; Pyflubumide.
(28) Ryanodine receptor modulator:
Chlorantraniliprole, Cyantraniliprole, Cyclaniliprole, Flubendiamide, Cyhalodiamide, Tetrachlorantraniliprole, Tetrachlorantraniliprole, Tetrachlorantraniliprole. Tetraniliprole).
(29) Chordotonal organ modulator (target site unspecified):
Flonicamid.
(30) GABA-gated chloride ion (chlorine ion) channel allosteric modulator:
Broflanilide, Fluxametamide, Isocycloseram; Afoxolaner, Fluralaner, Lotilaner, Saroraner.
(UN agent):
zadirachtin, Benzoximate, Bromopropylate, Chinomethionat, Dicofol, Lime sulfur, Mancozeb, Pyridalyl), Sulfur, Acynonapyr, Benzpyrimoxan, Flometoquin, Fluhexafon, Oxazosulfyl, Tyclopyrazoflor.

(Fungicide)

Examples of the fungicide include those exemplified in the action mechanism classification of the fungicide based on the FRAC. Specifically, the following active ingredients can be mentioned.

(1) Nucleic acid biosynthesis inhibitor:

(a) RNA polymerase I inhibitor: benalaxyl, benalaxyl-M, furalaxyl, metalaxyl, metalaxyl-M, oxadixyl, clozylacon, ofurace;
(b) Adenosine deaminase inhibitor: bupirimate, dimethirimol, ethirimol;
(c) DNA/RNA synthesis inhibitor: hymexazol, octhilinone;
(d) DNA topoisomerase II inhibitor: oxolinic acid.

(2) Mitotic and fission inhibitors:

(a) β-tubulin polymerization inhibitor: benomyl, carbendazim, chlorfenazole, fuberidazole, thiabendazole, thiophanate, thiophanate-methyl, diethofencarb, zoxamide, ethaboxam;
(b) Cell division inhibitor: pencycuron;
(c) Inhibitor of delocalization of spectrin-like protein: fluopicolide.

(3) Respiratory inhibitor:

(a) Complex I NADH oxidoreductase inhibitor: diflumetorim, tolfenpyrad;
(b) Complex II succinate dehydrogenase inhibitor: benodanil, flutolanil, mepronil, isofetamid, fluopyram, fenfuram, furmecyclox, Carboxin, oxycarboxin, thifluzamide, benzovindiflupyr, bixafen, fluxapyroxad, furametpyr, isopyrazam, penflufen, penthiopyrad, sedaxane, boscalid, pyraziflumid, pydiflumetofen, isoflucypram, inpyrfluxam;
(c) Complex III ubiquinol oxidative Qo inhibitor: azoxystrobin, coumoxystrobin, coumethoxystrobin, enoxastrobin, flufenoxystrobin, picoxystrobin, pyraoxystrobin, pyraclostrobin, pyrametostrobin, trilopyricarb, kresoxim-methyl,

trifloxystrobin, dimoxystrobin, fenaminstrobin, metminostrobin, orysastrobin, famoxadone, fluoxastrobin, fenamidone, Pyribencarb, mandestrobin, methyltetraprole;
(d) Complex III ubiquinol reductase Qi inhibitor: cyazofamid, amisulbrom, fenpicoxamid;
(e) Deconjugating agent for oxidative phosphorylation: binapacryl, meptyldinocap, dinocap, fluazinam, ferimzone;
(f) Oxidative phosphorylation inhibitor (inhibitor of ATP synthase): fentin acetate, fentin chloride, fentin hydroxide;
(g) ATP production inhibitor: silthiofam;
(h) Complex III: Qx (unknown) inhibitor of cytochrome bc1 (ubiquinone reductase): ametoctradin.

(4) Amino acid and protein synthesis inhibitor:

(a) Methionine biosynthesis inhibitor: andprim, cyprodinil, mepanipyrim, pyrimethanil;
(b) Protein synthesis inhibitor: blasticidin-S, kasugamycin, kasugamycin hydrochloride, streptomycin, oxytetracycline.

(5) Signal transduction inhibitor:

(a) Signal transduction inhibitor: quinoxyfen, proquinazid;
(b) MAP/histidine kinase inhibitor in osmotic signal transduction: fenpiclonil, fludioxonil, chlozolinate, iprodione, procymidone, vinclozolin.

(6) Lipid and cell membrane synthesis inhibitor:

(a) Phospholipid biosynthesis, methyltransferase inhibitor: edifenphos, iprobenfos, pyrazophos, isoprothiolane;
(b) Lipid peroxide: biphenyl, chloroneb, dichloran, quintozene, tecnazene, tolclofosmethyl, etridiazole;
(c) Agents acting on the cell membrane: iodocarb, propamocarb, propamocarbhydrochloride, propamocarb-fosetylate, prothiocarb;
(d) Microorganisms disturbing pathogen cell membrane: bacillus subtilis strain (bacillus subtilis), bacillus subtilis strain QST713, bacillus subtilis strain FZB24, bacillus subtilis strain MBI600, bacillus subtilis strain D747, bacillus amyloliquefaciens;
(e) Agents disturbing cell membranes: melaleuca alternifolia (tea tree) extract.

(7) Cell membrane sterol biosynthesis inhibitor:

(a) Demethylation inhibitors at position C14 in sterol biosynthesis: triforine, pyrifenox, pyrisoxazole, fenarimol, flurprimidol, nuarimol, imazalil, imazalil-sulphate, oxpoconazole fumarate, pefurazoate, prochloraz, triflumizole, viniconazole, azaconazole, bitertanol, bromuconazole, cyproconazole, diclobutrazol, difenoconazole, diniconazole, diniconazole-M, epoxy conazole, etaconazole, fenbuconazole, fluquinconazole, flusilazole, flutriafol, furconazole, furconazole-cis, hexaconazole, imibenconazole, ipconazole, metconazole, myclobutanil, penconazole, propiconazole, fluquinconazole, simeconazole, tebuconazole, tetraconazole, triadimefon, triadimenol, triticonazole, prothioconazole, voriconazole, mefentrifluconazole;
(b) Inhibitors of $\Delta 14$ reductase and $\Delta 8 \rightarrow \Delta 7$-isomerase in sterol biosynthesis: aldimorph, dodemorph, dodemorph acetate, fenpropimorph, tridemorph, fenpropidin, piperalin, spiroxamine;
(c) 3-Ketoreducase inhibitor in C4 demethylation of sterol biosynthesis system: fenhexamid, fenpyrazamine;
(d) Sterol biosynthesis squalene epoxidase inhibitor: pyributicarb, naftifine, terbinafine.

(8) Inhibition of cell wall synthesis

(a) Trehalase inhibitor: validamycin;
(b) Chitin synthase inhibitor: polyoxins, polyoxorim;
(c) Cellulose synthetic enzyme inhibitor: dimethomorph, flumorph, pyrimorph, benthiavalicarb-isopropyl, iprovalicarb, valifenalate, mandipropamid).

(9) Melanin biosynthesis inhibitor

(a) Reductase inhibitors for melanin biosynthesis: fthalide, pyroquilon, tricyclazole;
(b) Dehydrating enzyme inhibitor for melanin biosynthesis: carpropamid, diclocymet, fenoxanil;
(c) Inhibitor of melanin biosynthesis polyquetide synthesis: tolprocarb.

(10) Host plant resistance inducer:

(a) Agent that acts on the salicylic acid synthesis pathway: acibenzolar-S-methyl;
(b) Others: probenazole, tiadinil, isotianil, dichlobentiazox, laminarin, reynoutria sachalinensis extract.

(11) Agents with unknown activity: cymoxanil, fosetyl-aluminium, phosphoric acid (phosphate), tecloftalam, triazoxide, flusulfamide, diclomezine, methasulfocarb, cyflufenamid, metrafenone, pyriofenone, dodine, dodine free base, flutianil.
(12) Agents having a multi-action point: copper (copper salt), bordeaux mixture, copper hydroxide, copper naphthalate, copper oxide, copper oxychloride, copper sulfate, sulfur, sulfur product, calcium polysulfide, ferbam, mancozeb, maneb, mancopper, metiram, polycarbamate, propineb, thiram, zineb, ziram, captan, captafol, folpet, chlorothalonil, dichlofluanid, tolylfluanid, guazatine, iminoctadine triacetate, iminoctadine trialbesilate, anilazine, dithianon, quinomethionate, fluoroimide.
(13) Other agents: DBEDC, fluorofolpet, guazatine acetate, bis (8-quinolinolato) copper (II), propamidin, chloropicrin, cyprofuram, agrobacterium, bethoxazin, diphenylamine, methylisothiocyanate (MITC), mildiomycin, capsaicin, cufraneb, cyprosulfamide, dazomet, debacarb, dichlorophen, flumetover, fosetyl-calcium, fosetyl-sodium, irumamycin, natamycin, nitrothal isopropyl, oxamocarb, pyrrolnitrin, tebufloquin, tolnifanide, zarilamide, Algophase, amicarthiazol, oxathiapiprolin, metiram zinc, benthiazole, trichlamide, uniconazole, oxyfenthiin, picarbutrazox, dichlobentiazox, quinofumelin thiuram, ambam, agrobacterium radiobacter, coniothyrium minitans, pseudomonas fluorescens, pseudomonas rhodesiae, talaromyces flavus, trichoderma atroviride, erwinia carotovora subsp. carotovora, bacillus simplex, variovorax paradoxus, lactobacillus plantarum, florylpicoxamid, pyrapropoyne, fluindapyr, aminopyrifen, pyridachlometyl, ipflufenoquin.

(Plant growth regulator)

For example, the following plant growth regulators can be mentioned.
Abscisic acid, kinetin, benzylaminopurine, 1,3-diphenylurea, forchlorfenuron, thidiazuron, chlorfenuron, dihydrozeatin, gibberellin A, gibberellin A4, gibberellin A7, gibberellin A3, 1-methylcyclopropane, N-acetyl aminoethoxyvinyl glycine (aviglycine), aminooxyacetate, silver nitrate, cobalt chloride, IAA, 4-CPA, cloprop, 2,4-D, MCPB, indol-3-butyrate, dichlorprop, phenothiol, 1-naphthyl acetamide, ethychlozate, cloxyfonac, maleic acid hydrazide, 2,3,5-triiodobenzoic acid, salicylic acid, methyl salicylate, (-)-jasmonic acid, methyl jasmonate, (+)-strigol, (+)-deoxystrigol, (+)-orobanchol, (+)-sorgolactone, 4-oxo-4-(2-phenylethyl) aminobutyric acid, ethephon, chlormequat, mepiquat chloride, benzyladenine, 5-aminolevulinic acid, daminozide.
In one preferred embodiment, the compound (I) is used to control at least one insect shown below:

(1) Order of Coleoptera:

Elateroidea family, especially Agriotes species, for example, Agriotes linneatus, Agriotes mancus, Agriotes obscure;
Scarabaeidae family, especially Popillia species such as Popillia japonica;
Chrysomelidae family, especially Aulacophora species such as Aulacophora femoralis; Bruchus species such as Bruchus rufimanus, Bruchus pisorum; Callosobruchus species such as Callosobruchus chinensis; Cassida species such as Cassida nebulosa; Chaetocnema species such as Chaetocnema concinna; Diabrotica species such as Diabrotica barberi, Diabrotica undecimpunctata howardi, Diabrotica undecimpunctata undecimpunctata, Diabrotica virgifera virgifera, Diabrotica virgifera zeae, especially Diabrotica balteata; Leptinotarsa species such as Leptinotarsa decemlineata; Oulema species such as, Oulema oryzae; Phaedon species such as Phaedon armoraciae, Phaedon cochleariae, Phaedon concinnus, Phaedon cyanescens, Phaedon desotonis (desoto leaf beetle), Phaedon laevigatus (watercress leaf beetle), Phaedon oviformis, Phaedon prasinellus, Phaedon purpureus, Phaedon tumidulus, Phaedon viridis; Phyllotreta species such as Phyllotreta striolata, Phyllotreta nemorum, Phyllotreta aeneicollis, Phyllotreta albionica (cabbage flea beetle), Phyllotreta armoraciae (horseradish flea beetle), Phyllotreta bipustulata (woodland flea beetle), Phyllotreta chalybeipennis, Phyllotreta conjuncta, Phyllotreta cruciferae (crucifer flea beetle), Phyllotreta denticornis, Phyllotreta lewisii, Phyllotreta liebecki, Phyllotreta punctulata (radish flea beetle), Phyllotreta pusilla (western black flea beetle), Phyllotreta ramosa (western striped flea beetle), Phyllotreta robusta (garden flea beetle), Phyllotreta striolata (striped flea beetle), Phyllotreta undulata (small striped flea beetle), Phyllotreta zimmermanni (Zimmerman’s flea beetle); Psylliodes species such as Psylliodes angusticollis, Psylliodes affinis, Psylliodes chrysocephala (cabbage stem flea beetle), Psylliodes convexior (hop flea beetle), Psylliodes credens, Psylliodes napi, Psylliodes punctulatus (hop flea beetle);

(2) Order of Hemiptera:
Delphacidae family (especially Nilaparvata lugens), and Aphididae family, Aphis spp such as Aphis citricola, Aphis craccivora, Aphis fabae, Aphis forbesi, Aphis glycines, Aphis gossypii; Myzus species such as Myzus ascalonicus, Myzus cerasi, Myzus ligustri, Myzus ornatus, Myzus persicae, Myzus nicotianae; especially Rhopalosiphum species such as Rhopalosiphum maidis, Rhopalosiphum oxyacanthae, Rhopalosiphum rufiabdoininale, especially Rhopalosiphum padi;
(3) Order of Lepidoptera

Agrotis species such as Agrotis segetum, Agrotis ipsilon; especially Spodoptera species such as Spodoptera eradiana, Spodoptera exigua, Spodoptera praefica, especially Spodoptera frugiperda.
In one more preferred embodiment, the compound (I) is used to control either in the form of a seed treatment or in the form of an exogenous treatment (preferably in furrow application) at least one pest selected from the group consisting of soil-dwelling grubs, such as Diabrotica balteata, Diabrotica virgifera, Popillia species, Agriotes species, and other coleopteran pests such as Phaedon cochleariae, lepidopteran pests such as Agrotis segetum, Spodoptera frugiperda, aphicidal pests such as Rhopalosiphum padi, Myzus persicae, Aphis gossypiii and hoppers such as Nilaparvata lugens.

[Aspects of the present invention]

One aspect of the present invention refers to a method of controlling insects, comprising a step of applying the compound (I) to a seed in the form of a seed treatment before planting or in the form of an exogenous treatment of a seed (Aspect 1).
The method according to Aspect 1, wherein the seed is rape seed, corn seed, cereal seed, soybean seed or rice seed, preferably rape seed, corn seed, wheat seed, barley seed, soybean seed or rice seed, more preferably corn seed, barley seed, or rice seed, and most preferably corn seed.
The method according to Aspect 1, wherein the insect is a soil-dwelling grub.
The method according to Aspect 1, wherein the insect is selected from the group consisting of Diabrotica balteata, Diabrotica virgifera, Popillia species, Agriotes species, Bruchus species, Phyllotreta species, Phaedon cochleariae, Agrotis segetum, Spodoptera frugiperda, Rhopalosiphum padi, Myzus persicae, Aphis gossypiii and Nilaparvata lugens.
The method of Aspect 1, wherein the coating step is performed by coating the seed with the compound (I) and optionally at least one additional insecticide or fungicide.
The method according to Aspect 1, wherein the compound (I) is used as the only insecticide.
The method according to Aspect 1, wherein the compound (I) is used as the only fungicide.
The method according to Aspect 1, wherein a coating amount of the compound (I) is 0.05 to 1.5 g/kg seed.
The method according to Aspect 1, wherein the compound (I) is applied to a seed in the form of an exogenous treatment of a seed, the method comprising:

A) making a furrow in cultivated land;
B) seeding the furrow with seed;
C) applying to the furrow a composition comprising the compound (I); and
D) closing the furrow.

The method according to Aspect 1, wherein the compound (I) is applied to a seed in the form of an exogenous treatment of a seed, the method comprising:

A) making a furrow in cultivated land;
B) seeding the furrow with seed;
C) applying to the furrow a composition comprising the compound (I); and
D) closing the furrow, and

said seed is corn.
The method according to Aspect 1, wherein the compound (I) is applied to a seed in the form of an exogenous treatment of a seed, the method comprising:

A) making a furrow in cultivated land;
B) seeding the furrow with seed;
C) applying to the furrow a composition comprising the compound (I); and

D) closing the furrow;

said seed is corn, and
the compound (I) is the only insecticide in step C).

The method according to Aspect 1, wherein the compound (I) is applied to a seed in the form of an exogenous treatment of a seed, the method comprising:

A) making a furrow in cultivated land;
B) seeding the furrow with seed;
C) applying to the furrow a composition comprising the compound (I); and
D) closing the furrow;

said seed is corn, and
the compound (I) is the only fungicide in step C).

The method according to Aspect 1, wherein the compound (I) is applied to a seed in the form of an exogenous treatment of a seed, the method comprising:

A) making a furrow in cultivated land;
B) seeding the furrow with seed;
C) applying to the furrow a composition comprising the compound (I); and
D) closing the furrow;

said seed is corn, and
the compound (I) is the only nematicide in step C).

A seed coated with a layer comprising the compound (I) described in Aspect 1 or a layer consisting of the compound (I) described in Aspect 1.
Having described the embodiments in detail, it will be apparent that modifications and variations of the disclosure are possible without departing from the scope of the appended claims.

[EXAMPLES]

[Biological test example 1]

Efficacy test of corn seed treatment against Agriotes sp.

(1) Preparation of reagent solution

The compound (I) (30 parts), tristyryl-based surfactant (6.0 parts), dioctylsulfosuccinate metal salt (1.5 parts), silicone-based defoamer (1.2 parts), xanthan gum (0.2 parts), 1,2-benzisothiazolin-3-one (0.1 parts), propylene glycol (5.0 parts), and water (56 parts) were mixed to prepare a reagent solution.

(2) Seed treatment

Corn seeds were coated with the reagent solution so that the treatment amount of the compound (I) was 50 g per 50,000 seeds.
Further, corn seeds were similarly coated with tefluthrin as a control agent so that the treatment amount was 10 g per 50,000 seeds.

(3) Testing method

The treated seeds were planted in a 12-seed container and inoculated with 12 wire worm (Agriotes sp.) larvae. The container was placed outdoors, and 42 days later, the number of healthy stocks and the number of damaged stocks were investigated to determine the efficacy. The test was repeated 4 times.
The healthy stock ratio was calculated using the following formula.

$$\text{Healthy stock ratio (\%)} = 100 \times (\text{number of healthy stocks / number of seeds})$$

(4) Test results

As the compound (I), a compound represented by formula (II) and a compound represented by formula (III) were used.

The healthy stock ratio without treatment was 47.9%, whereas the compound represented by formula (II) showed a healthy stock ratio of 83.3%, and the compound represented by formula (III) showed a healthy stock ratio of 81.3. The compound (I) showed higher efficacy than tefluthrin which showed a healthy stock rate of 62.5%.

[Biological test example 2]

Efficacy test of rape seed treatment against Phyllotreta striolata

(1) Preparation of reagent solution

The compound (I) (30 parts), tristyryl-based surfactant (6.0 parts), dioctylsulfosuccinate metal salt (1.5 parts), silicone-based defoamer (1.2 parts), xanthan gum (0.2 parts), 1,2-benzisothiazolin-3-one (0.1 parts), propylene glycol (5.0 parts), and water (56 parts) were mixed to prepare a reagent solution.

(2) Seed treatment

Rape seeds were coated with the reagent solution so that the treatment amount of the compound (I) was 10 g per 100 kg of seeds.

(3) Testing method

The treated seeds were planted in a 10-seed pot and raised in a greenhouse for 14 days. After that, each pot was inoculated with 5 Phyllotreta striolata. The pots were stored in a constant temperature room at a temperature of 25°C and at a humidity of 65%. The life/death determination was made 6 days after releasing the insects, and the insecticidal rate was calculated by the following formula. The test was repeated 3 times.

$$\text{Insecticidal rate (\%)} = (\text{number of dead insects / number of test insects}) \times 100$$

(4) Test results

As the compound (I), a compound represented by formula (II) and a compound represented by formula (III) were used.

The insecticidal rate without treatment was 0%, whereas the compounds represented by formulas (II) and (III) showed an insecticidal rate of 100%, which was high efficacy.

[Industrial applicability]

The present invention provides a method for controlling insects in crops by seed treatment using a specific pyridylimidazole compound.

## Claims

1. A method for controlling insects, comprising a step of applying at least one selected from a compound represented by the following formula (I) and a salt thereof to a seed

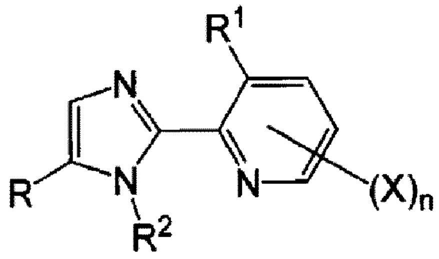

(I)

[in formula (I),

$R^1$ represents a substituted or unsubstituted C1-6 alkylthio group, a substituted or unsubstituted C1-6 alkylsulfinyl group, or a substituted or unsubstituted C1-6 alkylsulfonyl group,
$R^2$ represents a hydrogen atom, or a substituted or unsubstituted C1-6 alkyl group,
R represents a C1-6 haloalkyl group, or a C2-6 haloalkenyl group,
X represents a substituted or unsubstituted C1-6 alkyl group, a substituted or unsubstituted C2-6 alkenyl group, a substituted or unsubstituted C2-6 alkynyl group, a hydroxyl group, a substituted or unsubstituted C1-6 alkoxy group, a formyl group, a substituted or unsubstituted C1-6 alkylcarbonyl group, a substituted or unsubstituted C1-6 alkoxycarbonyl group, a mercapto group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-8 cycloalkyl group, a substituted or unsubstituted C6-10 aryl group, a substituted or unsubstituted 5- to 6-membered heteroaryl group, a substituted or unsubstituted amino group, a halogeno group, a cyano group, or a nitro group,
n represents the number of X, and is an integer of 0 to 4, and when n is 2 or more, X may be the same as or different from each other].

2. The method according to Claim 1, wherein the seed is at least one selected from the group consisting of a rape seed, a corn seed, a soybean seed, a rice seed, a wheat seed, and a barley seed.

3. The method according to Claim 1 or 2, wherein the insect is a soil-dwelling grub.

4. The method according to Claim 1 or 2, wherein the insect is an insect of the family Chrysomelidae.

5. The method according to Claim 1 or 2, wherein the insect is at least one selected from the group consisting of Diabrotica balteata, Diabrotica virgifera, Popillia species, Agriotes species, Bruchus species, Phyllotreta species, Phaedon cochleariae, Agrotis segetum, Spodoptera frugiperda, Rhopalosiphum padi, Myzus persicae, Aphis gossypiii, and Nilaparvata lugens.

6. The method according to any one of Claims 1 to 5, wherein the applying step is performed by coating the seed with

at least one selected from the group consisting of the compound represented by the above formula (I) and a salt thereof, or
at least one selected from the group consisting of the compound represented by the above formula (I) and a salt thereof, and at least one further insecticide or fungicide.

7. The method according to any one of Claims 1 to 6, wherein at least one selected from the group consisting of the compound represented by formula (I) and a salt thereof is used as the only insecticide.

8. The method according to any one of Claims 1 to 6, wherein at least one selected from the group consisting of the compound represented by formula (I) and a salt thereof is used as the only fungicide.

9. The method according to any one of Claims 1 to 8, wherein a coating amount of the at least one selected from the group consisting of the compound represented by formula (I) and a salt thereof is 0.05 g to 1.5 g/kg seed.

10. The method according to any one of Claims 1 to 5, wherein the applying step is performed by performing the following steps in this order:

A) making a furrow in cultivated land;
B) seeding the furrow with seed;
C) applying to the furrow a composition comprising at least one selected from the group consisting of the compound represented by formula (I) and a salt thereof; and
D) closing the furrow.

**11.** A seed coated with at least one selected from a compound represented by formula (I) and a salt thereof

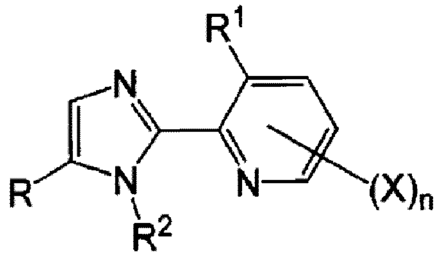

(I)

[in formula (I),

$R^1$ represents a substituted or unsubstituted C1-6 alkylthio group, a substituted or unsubstituted C1-6 alkylsulfinyl group, or a substituted or unsubstituted C1-6 alkylsulfonyl group,
$R^2$ represents a hydrogen atom, or a substituted or unsubstituted C1-6 alkyl group,
R represents a C1-6 haloalkyl group, or a C2-6 haloalkenyl group,
X represents a substituted or unsubstituted C1-6 alkyl group, a substituted or unsubstituted C2-6 alkenyl group, a substituted or unsubstituted C2-6 alkynyl group, a hydroxyl group, a substituted or unsubstituted C1-6 alkoxy group, a formyl group, a substituted or unsubstituted C1-6 alkylcarbonyl group, a substituted or unsubstituted C1-6 alkoxycarbonyl group, a mercapto group, a substituted or unsubstituted C1-6 alkylthio group, a substituted or unsubstituted C1-6 alkylsulfinyl group, a substituted or unsubstituted C1-6 alkylsulfonyl group, a substituted or unsubstituted C3-8 cycloalkyl group, a substituted or unsubstituted C6-10 aryl group, a substituted or unsubstituted 5- to 6-membered heteroaryl group, a substituted or unsubstituted amino group, a halogeno group, a cyano group, or a nitro group,
n represents the number of X, and is an integer of 0 to 4, and when n is 2 or more, X may be the same as or different from each other].

## INTERNATIONAL SEARCH REPORT

International application No.
**PCT/JP2021/048496**

**A. CLASSIFICATION OF SUBJECT MATTER**

***A01N 43/50***(2006.01)i; ***A01N 25/00***(2006.01)i; ***A01P 7/04***(2006.01)i
FI: A01N43/50 A; A01P7/04; A01N25/00 102

According to International Patent Classification (IPC) or to both national classification and IPC

**B. FIELDS SEARCHED**

Minimum documentation searched (classification system followed by classification symbols)

A01N43/50; A01N25/00; A01P7/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | WO 2020/071304 A1 (NIPPON SODA CO., LTD.) 09 April 2020 (2020-04-09) claims, examples, paragraphs [0105]-[0106], [0118], [0126]-[0127], [0170]-[0173], [0191]-[0192] | 1-11 |
| X | WO 2020/090585 A1 (NIPPON SODA CO., LTD.) 07 May 2020 (2020-05-07) claims, examples, paragraphs [0006], [0105], [0117], [0168] | 1-11 |
| X | WO 2017/104741 A1 (NIPPON SODA CO., LTD.) 22 June 2017 (2017-06-22) claims, examples, paragraphs [0109]-[0110], [0122] | 1-11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 February 2022** | **22 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2021/048496**

| Patent document cited in search report | Publication date (day/month/year) | Patent family member(s) | Publication date (day/month/year) |
|---|---|---|---|
| WO 2020/071304 A1 | 09 April 2020 | CN 112771034 A<br>claims, examples, paragraphs [0304]-[0305], [0564]-[0569], [0594]-[0595]<br>KR 10-2021-0069637 A | |
| WO 2020/090585 A1 | 07 May 2020 | CN 112930339 A<br>claims, examples, paragraphs [0015], [0256]-[0258], [0354], [0548] | |
| WO 2017/104741 A1 | 22 June 2017 | US 2018/0362470 A1<br>claims, examples, paragraphs [0228], [0229], [0289]<br>EP 3395801 A1<br>CN 108430976 A<br>KR 10-2018-0095813 A<br>BR 112018011691 A<br>TW 201726628 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2017104741 A
- WO 2020071304 A
- WO 2020090585 A